# EUROPEAN PATENT SPECIFICATION

(11) **EP 1 006 800 B1**
(45) Date of publication and mention of the grant of the patent: **28.05.2003**
(21) Application number: 98946330.2
(22) Date of filing: 13.08.1998
(51) Int. Cl.: A01N 59/14

(54) **POTENTIATED MEPIQUAT PLANT GROWTH REGULATOR COMPOSITIONS**
MEPIQUAT PFLANZENWACHSTUMSREGULATORZUSAMMENSETZUNG MIT GESTEIGERTER WIRKUNG
COMPOSITIONS DE MEPIQUAT REGULATRICES DE CROISSANCE POTENTIALISEES

(30) Priority: 25.08.1997 US 920196
(43) Date of publication of application: 14.06.2000
(73) Proprietor: BASF CORPORATION, Mount Olive, New Jersey 07828-1234 (US)
(72) Inventor: FERSCH, Kenneth, E., Apex, NC 27502 (US); GIBSON, Scott, W., Raleigh, NC 27613 (US); HOBBS, David, G., Raleigh, NC 27613 (US)
(74) Representative: Werner, Frank
(86) International application number: EP9805149
(87) International publication number: WO99009832

(56) References cited:
- DE-A- 3 636 431
- CHEMICAL ABSTRACTS, vol. 122, no. 3, 16 January 1995 Columbus, Ohio, US; abstract no. 30602, XP002087704 & CN 1 085 884 A (FAMING ZHUANLI SHENQING GONGKAI SHUOMINGSHU) 27 April 1994
- CHEMICAL ABSTRACTS, vol. 116, no. 21, 25 May 1992 Columbus, Ohio, US; abstract no. 209624, J.S.MCCONNEL ET AL.: "Response of cotton to nitrogen fertilization and early multiple applications of mepiquat chloride" XP002087705 & J.PLANT NUTR., vol. 15, no. 4, 1992, pages 457-468,
- CHEMICAL ABSTRACTS, vol. 89, no. 1, 3 July 1978 Columbus, Ohio, US; abstract no. 4906, J.T.COTHREN: "Petiole nitrate and leaf nitrogen content of mepiquat chloride-treated cotton (Gossypium hirsutum L.)" XP002087706 & PROCEEDINGS OF THE PLANT GROWTH REGULATOR SOCIETY OF AMERICA. THIRTEENTH ANNUAL MEETING, ST.PETERSBURG BEACH, FLORIDA,August 1986, page 244
- CHEMICAL ABSTRACTS, vol. 122, no. 13, 27 March 1995 Columbus, Ohio, US; abstract no. 159678, XP002087707 & CN 1 091 730 A (FAMING ZHUANLI SHENQUING GONKAI SHUOMINGSHU) 7 September 1994
- CHEMICAL ABSTRACTS, vol. 123, no. 25, 18 December 1995 Columbus, Ohio, US; abstract no. 332801, XP002087708 & CN 1 102 053 A (FAMING ZHUANLI SHENQUING GONGKAI SHUOMINGSHU) 26 October 1993

## Description

The present invention relates to mepiquat plant growth regulator compositions and to the use thereof. More specifically, it relates to formulations of mepiquat in combination with a boron potentiator and to methods of plant growth regulation, particularly cotton plant growth regulation.

Plant growth regulators (PGRs) affect the physiology of plant growth and influence the natural rhythm of plant development. More specifically, various PGRs can, for example, reduce plant height, stimulate seed germination, induce flowering, darken leaf coloring, minimize lodging of cereals, change the rate of plant growth, and modify the timing and efficiency of fruiting.

PGRs are recognized as an essential tool in modern cotton production. Mepiquat, i.e., the quaternary ammonium salt of N,N-dime-thylpiperidinium, the first widely accepted PGR for cotton plants, is typically applied to cotton plants in the form of its chloride salt, i.e., mepiquat chloride, by foliar application. PGR compositions containing mepiquat chloride were first introduced into commerce by BASF AG, (Germany), nearly two decades ago under the trademark, PIX®, and have since achieved widespread recognition, use and commercial success. Indeed, PIX® was named as the "Product of the Decade" by Cotton Farming Magazine, Reader's Poll, for the years 1980-1990. Currently, the combined sales worldwide of PIX® and competitive, generic PGR compositions containing mepiquat chloride, exceed 50 million dollars annually. See, for example, Khafaga, Angew. Botanik 57, 257-265 (1983); Sawan et al., J. Agronomy & Plant Science, 154, 120-128 (1985); Ray, Deciphering PGRs, Cotton Farming, June 1997, 18-20; Cotton Production, 1995 Delta Agricultural Digest, 22-24, (published by Argus Agronomics, a division of Argus, Inc.); and U.S. Pat. Nos. 3,905,798 and 4,447,255.

The most visible effect of mepiquat chloride PGRs on cotton plants is the reduction of overall plant height, reduction of the distance between nodes, and reduction of plant width. In turn, light penetration to the lower leaves of the plant is enhanced, promoting lower boll retention. Mepiquat chloride can also lead to a number of other significant commercial benefits for the cotton producer. Cotton, like many other perennial crops, tends to partition excessive resources to leaf and stem production. When properly applied, mepiquat chloride can redirect the plant's resources toward reproductive growth, i.e., growth of bolls.

The specific benefits achieved by use of mepiquat chloride in cotton production depend upon many factors including the species of cotton, environmental conditions, the geographical area, and the climatology or weather conditions of the area during the particular growing season. In the nearly two decades of experience using mepiquat chloride as a PGR in cotton production, a great deal has been learned as to its most effective application. Currently, it is generally understood that the most beneficial use of mepiquat chloride PGRs is achieved by application of mepiquat chloride in coordination with good cotton crop management practice, in which mepiquat chloride application is varied according to the various factors of plant species, weather, climate, geographic location, and like considerations.

When cotton is well-managed and mepiquat chloride is applied according to label directions, various benefits have been consistently obtained. These benefits include better retention of early cotton bolls, which in turn increases the quantity of mature cotton bolls at harvest. A related benefit that is often achieved by use of mepiquat chloride PGRs is an increase in the weight of harvestable bolls. Another highly desirable benefit that is often achieved by using mepiquat chloride PGRs is "earliness" of boll opening.

Earliness can allow the cotton to be harvested 3-12 days earlier than untreated cotton plants. A week earlier harvest can be of great economic importance in many areas because this allows harvesting of the cotton before fall rains and before the hours per day available for harvest diminishes. Earliness is also important because once a boll is open, the quantity and/or quality of the lint decreases due to weathering. It has been reported based on a series of studies that harvesting of cotton will typically cover a span of about 30 calendar days allowing for brief interruptions by rain. However, a delay in the beginning of harvesting by just one week results in the strong possibility that the 30-day working period will spread out to almost 60 days because the chances for rain increase sharply during the later stages of harvest season. In turn, cotton weight and quality decrease during the entire harvest period.

In addition to PGR application, proper management of cotton crops typically includes a fertilization program. In cotton production, nitrogen and often other nutrients are needed in varying amounts for different soils and conditions. Commonly used fertilizers in cotton crop production include nitrogen, phosphate, potassium, and boron fertilizers. These are commonly applied either to the soil or as a foliar application.

For example, foliar applications of boron have been recommended for preventing stunted plant growth, and for improving fruit initiation and boll retention in cotton plants. To achieve this, boron is applied to the cotton plant by foliar application at nutritional levels of 0.112 to 0.224 kg/ha (0.1 to 0.2 pounds/acre) (calculated based on elemental boron) of cropland, at weekly intervals, for three to six applications beginning at the 8-leaf stage or when cotton begins to square. Elemental boron is normally supplied in the form of a boron salt, for example SOLUBOR® (U.S. Borax Co.) which supplies boron in the form of disodium octaborate tetrahydrate. The latter comprises 20.5 wt.% elemental boron and is thus applied at a rate of 0.56 to 1.12 kg/ha (0.5 to 1.0 pounds/acre) of product to deliver 0.112 to 0.224 kg/ha (0.1 to 0.2 pounds/acre) of elemental boron. Boron can also be supplied by Borax, which comprises 11 wt.% elemental boron, by boric acid in the case of alkaline soils, or by other agriculturally acceptable boron compositions.

Similarly, multi-component fertilizers that are used or recommended for use in cotton plants may, in some cases, contain very low levels of trace elements and micronutrients such as boron compositions for promoting uptake and/or use of the fertilizer by the cotton plant. Although not specifically recommended for use on cotton plants, BASfoliar™ (BASF AG) liquid is believed to be representative of such fertilizers. BASfoliar™ contains 0.3g/l elemental boron and is recommended to be applied at rates which supply 0.91 to 3.41 kg/ha (0.37 to 1.38 grams/acre) of elemental boron in hydraulic (aqueous) sprays. In those instances in which cotton growers apply fertilizers and/or other nutrients such as boron by foliar application, the grower sometimes includes the fertilizer or nutrient as an additive in a mepiquat chloride formulation. Accordingly, the fertilizer or nutrient is applied to cotton plants in such instances as a component of the aqueous solution containing mepiquat chloride.

It is generally understood in the PGR art that efficacy of various PGR compositions can be enhanced by the addition of certain agriculturally acceptable potentiator additives. However, although various micronutrients, nutrients and fertilizers have been applied by foliar application to cotton plants in combination with mepiquat chloride PGRs, available studies evaluating such mixtures have identified no significant positive impact on mepiquat chloride efficacy as a result of such additives. Indeed, one recent study that evaluated the impact of high fertilization rates of nitrogen fertilizer together with foliar application of mepiquat chloride at various concentrations, with or without the addition of 0.22 kg boron/ha, concluded that the combined effects of boron and mepiquat chloride tended to be antagonistic because the addition of boron to the foliar mepiquat chloride formulation usually increased the height of the plants compared to application of mepiquat chloride alone, although a tendency toward increased yields was also associated with boron. See McConnell et al., *Response of Cotton to Nitrogen Fertilization and Early Multiple Applications of Mepiquat Chloride*, J. Plant Nutrition, 15 (4) 457-68 (1992).

Furturemore J. T. Cothren (Proceedings of the Plant Growth Regulator Society of America, 13^{th} annual meeting, St. Petersburg Beach, Florida, August 1986, p. 224) examined the content of nitrogen in the leafs of cotton as well as the level of nutrients like Ca, Mg, K, P, after treatment with mepiquat chloride and/or boron and /or urea. The three year study showed that the lint yield has been increased by about 8.8 % by mepiquat chloride treatment compared to the non-treated control.

Also it is known of CN 1 085 884 that special compositions comprising a variety of different inorganic salts (K, Mn, Zn, Fe, Cu ..), special insecticides/bactericides (8010 and 5406), sodium xanthohumate, phenol, borax/boric acid, acetylsalicylic acid and mepiquat chloride are used as foliar fertilizers for peanuts which prevent and cure this crop as well.

CN 1 091 730 discloses a foliar fertilizer comprising a cloroplast regulator, a combination of multiple microelements like baron, zinc, iron, calcium - as well as major elements like phosphoreous and potassium to promote the balance of the element supply inside the plants and to promote the growth of the plants like cotton, tobacco, peanuts... .

Fulturemore a high efficiency cotton seedling strenghening agent is disclosed by CN 1 102 053. It comprises maifanshi - which includes over 50 elements - banzhangshuang, pentachloronitrobenzene, cytokinin, KH₂PO₄, ZnSO₄, Borax, mepiquant cloride, phoxium and KNO₃.

In view of the significant benefits and widespread commercial success of mepiquat chloride PGR compositions, there has been substantial research directed to identifying agriculturally acceptable adjuvants, potentiators and the like that can be applied to cotton plants in combination with mepiquat chloride to enhance the beneficial PGR properties thereof. However despite commercial interest and substantial research to identify formulations that provide improved effectiveness of mepiquat chloride, no for-mulation has been introduced into commerce that meets regulatory restrictions for protecting the environment and which also has been demonstrated to improve the efficacy of mepiquat chloride in actual conditions of use. Accordingly, no such formulations are currently available to the cotton growing industry.

The present invention provides potentiated mepiquat PGR formulations for treating cotton that are capable of providing enhanced mepiquat PGR efficacy. When properly applied to cotton plants under appropriate growing conditions, the potentiated mepiquat formulations of the invention can enhance earliness of boll opening and/or improve lint yield as compared to conventional mepiquat chloride PGRs.

Potentiated mepiquat PGR formulations for treatment of cotton according to the invention comprise an agriculturally acceptable mepiquat salt, preferably mepiquat chloride, in combination with disodium octaborate tetrahydrate. The quantity of boron in the formulation provides a boron application rate that is below the minimum rate at which boron is delivered to cotton plants by foliar application of boron fertilizers, but that is above the rate at which boron is delivered to cotton plants by foliar application of multi-component fertilizers which include a boron micronutrient component. Nevertheless, when used in combination with mepiquat in accord with the present invention, these quantities of boron can enhance the plant growth regulating efficacy of the mepiquat chloride PGR to provide earlier boll opening; more vigorous, yet controlled, plant development; and/or improved lint yields.

The potentiated mepiquat PGR formulations of the invention include sufficient quantities of disodium octaborate tetrahydrate to provide a boron application rate of from about 3.71 g/ha (1.5 g/acre) to less than 111.15 g/ha (45 g/acre) (calculated based on elemental boron). Preferably, the potentiated mepiquat formulations of the invention contain a sufficient quantity of disodium octaborate tetrahydrate to provide a boron application rate of from about 4.94 g/ha (2.0 g/acre) up to about 98.8 g/ha (40 g/acre) (based on elemental boron). Currently preferred potentiated mepiquat compositions of the invention include sufficient quantities of disodium octaborate tetrahydrate to provide an elemental boron application rate of from 7.41 to 61.75 g/ha (3.0 to 25 g/acre).

Advantageously, the potentiated mepiquat PGR formulations of the invention comprise a weight ratio of mepiquat to boron (calculated based on the mepiquat cation and elemental boron) of from 14:1 to 1:45, preferably from about 5:1 to about 1:20, more preferably between about 2:1 and about 1:10. Preferred potentiated mepiquat compositions of the invention contain mepiquat in the form of its chloride salt, i.e., mepiquat chloride, in combination with a liquid agriculturally acceptable carrier, preferably water, although solid agriculturally acceptable carriers can alternatively be used. Advantageously, the potentiated mepiquat PGR formulations of the invention are provided in the form of a concentrate in a sealed package, e.g., a bottle, carton, or pouch package. In such embodiments of the invention, the package bears instructions specifying an application rate for the formulation such that disodium octaborate tetrahydrate is applied at less than 111.15 g/ha (45 g/acre), based on elemental boron. In one preferred embodiment, the concentrate formulation comprises the mepiquat chloride/boron mixture as an aqueous solution in which the mepiquat chloride is present in an amount of from about 4 wt.% to about 5 wt.% (calculated based on mepiquat chloride) and disodium octaborate tetrahydrate is present in an amount of between about 1 and about 15 wt.% (calculated based on the actual weight of the complete boron salt).

The potentiated mepiquat PGR formulations of the invention are particularly desirable agricultural formulations because the active ingredients have long been used to treat cotton plants and thus, no new active ingredient is introduced into the environment or into the cotton crop. Indeed, the quantity of mepiquat applied to cotton by formulations of the invention is comparable to, or generally the same as applied by conventional mepiquat PGR formulations, while the quantity of boron applied to cotton is in the range below quantities applied by conventional boron fertilizer treatments and above quantities applied by boron micronutrient components of other fertilizers. Nevertheless, the benefits provided by the formulations of the invention are substantial. In particular, the enhanced earliness of boll opening that can be achieved by formulations of the invention is a long sought-after property in cotton PGR formulations because of the resulting economic benefits to the cotton producer.

In the following detailed description, preferred embodiments of the invention are discussed in detail to enable practice of the invention. It will be apparent that although specific terms are used to describe the preferred embodiments, these are used in the descriptive sense and not for the purpose of limiting the invention thereto. It will also be apparent that the invention is susceptible to numerous changes and may be embodied in many diffe-rent forms other than the preferred embodiment specifically described below as will become apparent from a consideration of the invention as described in the foregoing and hereinafter.

The potentiated mepiquat formulations of the invention are based on the combination of a mepiquat salt, i.e., a quaternary ammonium salt of N,N-dimethylpiperidinium, and an agriculturally acceptable water soluble boron salt. The quaternary ammonium mepiquat salt used to form the composition of the invention is preferably a mepiquat halide salt, most preferably mepiquat chloride. These compositions are disclosed in detail in U.S. Patent No. 4,447,255 issued May 8, 1984 to Schott et al.; and in U.S. Patent No. 3,905,798, issued September 16, 1975 to Zeeh et al.; which are incorporated herein by reference. Mepiquat chloride is commercially available from BASF Corporation under the trademark, PIX®.

As used herein, the term "agriculturally acceptable" includes agricultural, industrial and residential uses which are compatible with plants. Disodium octaborate tetrahydrate is commercially available as SOLUBOR® from U.S.Borax, Valencia, CA.

The mepiquat salt and the disodium octaborate tetrahydrate are provided at a molar ratio of mepiquat to boron (calculated based on the mepiquat cation and elemental boron) of from 14:1 to 1:45, preferably from about 5:1 to about 1:20, more preferably from about 2:1 to about 1:10, even more preferably from about 1.5:1 to about 1:5. One currently preferred formulation of the invention includes the mepiquat salt and disodium octaborate tetrahydrate at a molar ratio of mepiquat to boron (calculated based on the mepiquat cation and elemental boron) of about 1:1.

The potentiated mepiquat formulations of the invention can be provided in various forms, including package, i.e., concentrated, and tank mix, i.e., ready to use, forms, and also in various concentrations and different physical forms. Advantageously, when the formulation is a liquid, it includes a mepiquat salt content ranging from about 0.01 to about 55 wt. %, calculated based on the weight of mepiquat cation, and a disodium octaborate tetrahydrate content ranging from about 0.01 to about 14.5 wt.% of the liquid formulation. If desired, the formulation can also be provided in the form of a liquid slurry in which all or a portion of one or both active ingredients is suspended in the liquid. When the formulation is provided in substantially dry or solid form, the water soluble boron salt is preferably included in an amount of from 0.01 to about 20 wt.% of the solid formulation, calculated based on elemental boron, and the agriculturally acceptable mepiquat salt constitutes from about 0.01 to about 70 wt.% of the solid formulation. Solid or dry formulations, and slurry formulations are typically concentrates that are diluted prior to use. In the case of concentrates, the mepiquat and borate active ingredients can comprise substantially all of the formulation, e.g. up to about 98 wt.%.

Preferably the formulation is provided in the form of a concentrate in a sealed package. Such packages include glass and plastic bottles and bottle-like containers, carton containers, pouch containers formed of various film, foil, and/or paper materials or laminates thereof, and like containers as will be apparent. In such cases, the concentrate formulation is diluted by the user according to label instructions prior to use thereof, so that the active ingredients are applied at specified rates, discussed in detail below. Typically, a concentrate formulation is diluted in an amount ranging from about 2:1 to about 800:1 (diluent to concentrate).

Highly preferred concentrate formulations contain mepiquat in the form of its chloride salt, i.e., mepiquat chloride, in combination with an agriculturally acceptable carrier, preferably a liquid carrier such as water, although solid agriculturally acceptable carriers can alternatively be used. Advantageously, such liquid concentrate formulations comprise a mepiquat chloride/boron mixture as an aqueous solution in which the mepiquat chloride is present in a relationship to disodium octaborate tetrahydrate in a weight ratio of from 1:2 up to 1:20, calculated based on the weight of mepiquat chloride and elemental boron. Preferably the mepiquat chloride is present in an amount of from about 4 to about 5 wt. %, e.g., about 4.2 wt.%, calculated based on mepiquat chloride weight (3.2 wt.% mepiquat cation). It is also preferred that in the concentrate the dissolved disodium octaborate tetrahydrate is present, in an amount of between about 1 and about 15 wt. %, more preferably, between about 3 and about 14 wt. %, calculated based on the weight of the complete salt.

In any case, the concentration of mepiquat in the formulation is adjusted to provide an application rate of mepiquat of from about 2.47 g/ha (1 g/acre) to about 49.4 g/ha (20 g/acre), calculated based on mepiquat cation, for each application. Within the parameters of the above ratios, the concentration of the water soluble boron salt in the formulation is adjusted to provide an application rate of boron of from about 3.705 g/ha (1.5 g/acre) to less than 111.15 g/ha (45 g/acre), calculated based on elemental boron, preferably between about 4.94 g/ha (2 g/acre) and about 98.8 g/ha (40 g/acre) more preferably between about 6.175 g/ha (2.5g/acre) and about 86.45 g/ha (35 g/acre), most preferably between about 7.41 g/ha (3 g/acre) and about 61.75 g/ha (25 g/acre).

For example, a formulation comprising 97.56 wt. % disodium octaborate tetrahydrate (20 wt.% elemental boron) and 0.59 wt.% mepiquat chloride (0.45 wt.% mepiquat cation) comprises a ratio of mepiquat cation to elemental boron of 1:45. When this formulation is applied at a rate of 555.75 g/ha (225 g/acre) of the formulation, (typically after dilution with an agriculturally acceptable carrier such as water) it will deliver 111.15 g/ha (45 g/acre) of elemental boron and 2.47 g/ha (1 g/acre) of mepiquat cation. On the other hand, a formulation comprising 4.88 wt.% disodium octaborate tetrahydrate (1.0 wt.% elemental boron) and 18.34 wt.% mepiquat chloride (14 wt.% mepiquat cation) comprises a ratio of mepiquat cation to elemental boron of 14:1. When this formulation is applied at a rate of 108.186 g/ha (43.8 g/acre) of the formulation (again, typically after dilution), it will deliver 3.705 g/ha (1.5 g/acre) of elemental boron and 51.87 g/ha (21 g/acre) of mepiquat cation. These two formulations illustrate preferred maximum and minimum label recommended application rates for each of boron and mepiquat cation for the formulations of the invention.

The formulations of the invention can be provided in dry granule or powder form, as a liquid concentrate or full strength liquid. In typical concentrate formulations, and in the form for application to plants, the formulation will also include one or more agriculturally acceptable diluents as are known in the art, including; in the case of liquid formulations, water, dimethyl sulfoxide, n-methylpyrrolidone and various other ketones, aromatic and aliphatic hydrocarbon oils, vegetable oils and modified vegetable oils such as esterified vegetable oils, alcohols such as isopropyl and ethyl alcohol, polyols such as ethylene or propylene glycols, esters, and the like; and in the case or solid formulations, various clays, binders, and fillers, such as diatomaceous earth, attapulgite, and the like, fertilizers such as ammonium sulfate, ammonium nitrate, and urea, solid polyols such as sorbitol, manitol and other sugars, and other solid carriers such as salt, dirt, wood-based or other cellulosic particulate materials, and the like. Various other preferred agriculturally acceptable carriers are disclosed in the aforementioned U.S. Patent No. 4,447,255 issued May 8, 1984 to Schott et al.; and U.S. Patent No. 3,905,798, issued September 16, 1975 to Zeeh et al.

In addition, the formulations of the present invention can also include other ingredients or adjuvants commonly employed in the art, including penetrants, surfactants, crop oils, drift control agents, defoaming agents, preservatives, wetting agents, adherents, antimicrobial agents, and the like, including mixtures thereof, as are also well known in the art and disclosed, for example in the aforementioned U.S. Patent No. 4,447,255 and U.S. Patent No. 3,905,798.

The plant growth regulator formulations of the invention are applied to above ground portions of plants, i.e., by foliar application. Such foliar application can be carried out by various conventional methods and apparatus as are well known in the art including spraying, atomizing, dusting, boom and hand application, hydraulic nozzle, electrostatic atomizers, spreaders, and the like. The composition may be applied aerially if desired. Desirably, the formulations of the invention are applied in the form of an aqueous solution.

The formulations of the invention can be applied to cotton plants in a single application, but are preferably applied in multiple applications distributed throughout the growing season, wherein the timing of application and the concentration of the active ingredients are varied depending on factors including the species and variety of the plant; the development stage of the plant and the season of the year; the application locality and site; climatic conditions, such as temperature, amount of precipitation, and also length of day and intensity of light; and soil properties, including fertilization. It is currently believed that the formulations of the invention are best applied to cotton plants in accordance with the same considerations as are used in connection with PIX® plant growth regulator compositions, as discussed in for example, *PIX® Plant Regulator, Official Handbook*, 1996, BASF Corporation, Research Triangle Park, NC, which is incorporated herein by reference.

As with conventional mepiquat, the PGR formulations of the invention function to inhibit the vegetative growth of cotton plants, which is expressed in particular in a reduction in longitudinal growth. Hence the treated plants exhibit a dwarfed growth; and a darker leaf coloration can also normally be observed. Among other effects, this also makes possible completely mechanized harvesting of this important crop plant. Because of the relatively small leaf and plant mass after treatment, attack by various diseases (such as fungus) can be decreased as well. The inhibition of vegetative growth also makes it possible to space the individual plants more closely, making a higher yield for the acreage possible.

The terms "potentiate" and "potentiated", are used herein, to include both quantitative improvements, and qualitative improvements such as one or more different plant growth affects or properties, that result from the combination of active ingredients, and are not generally predictable based on the normally expected activity of the individual active ingredients. Thus, in some instances, the formulations of the invention can provide increased yields of cotton lint. In many cases the formulations of the invention provide more vigorous, yet controlled, plant development. Significantly, the formulations of the invention can also shorten the time required for opening of the cotton boll by one day to several days or longer, depending on the particular growing season, location and weather conditions, and appropriate management of the cotton crop.

The following examples are intended to illustrate desirable formulations and plant growth improvements provided according to the invention. However, as will be apparent, they are not intended as limitations thereon. Cotton plants were treated in five separate locations as follows: Louisiana; Mississippi, East Texas; West Texas; and Tennessee. In each location, a portion of the cotton crop was used as a control portion and no plant growth regulator was applied; a second portion of the cotton crop was treated with mepiquat chloride (PIX® plant growth regulator) which was applied in several treatments (set forth below) at a concentration of 11.115 g/ha (4.5 g/acre) (calculated based on mepiquat chloride), per application; and a third portion of the cotton crop was treated with the combination of mepiquat chloride (PIX® plant growth regulator) mixed with a water soluble boron salt, disodium octaborate tetrahydrate (SOLUBOR®, U.S.Borax, Valencia, CA.) wherein the quantities of mepiquat chloride and boron in the mixture were adjusted to apply mepiquat chloride at a rate of 11.115 g/ha (4.5 g/acre) (calculated based on mepiquat chloride), and to apply the disodium octaborate tetrahydrate at a rate of 8.398 g/ha (3.4 g/acre) (based on elemental boron).

The "mepiquat" and "mepiquat plus disodium octaborate tetrahydrate" formulations were applied three times during the growing season at the Louisiana site; four times during the growing season at the Mississippi site; four times during the growing season at the East Texas site; two times during the growing season at the West Texas site; and three times during the growing season at the Tennessee site.

Measurements were made at the various sites to determine the plant growth regulation effects of the formulations of the invention. The following results were obtained, as set forth in Tables 1, 2, 3 and 4, below

**TABLE 1**

| Measurements of Early Maturity | | | |
|---|---|---|---|
| Location | Untreated | Mepiquat | Mepiquat + Boron |
| | Nodes Above White Flower | | |
| TN | 5 | 2 | 0 |
| | Percent Open Bolls | | |
| E.TX | 22 | 20 | 27 |
| | Number of Open Bolls | | |
| LA | 14.6 | 11.2 | 15.6 |
| MS | 9.9 | 11.9 | 11.9 |
| AVE (LA, MS) | 12.25 | 11.55 | 13.75 |

**TABLE 2**

| YIELD | | | |
|---|---|---|---|
| Location | Untreated | Mepiquat | Mepiquat + Boron |
| | YIELD, lint kg/ha [lb/A] (as % of untreated yield) | | |
| TN | 812 [725] (100) | 932 [832] (115) | 1035 [924] (127) |
| W.TX | 758 [677] (100) | 828 [739] (109) | 861 [796] (118) |
| LA | 699 [642] (100) | 563 [503] (78) | 777 [694] (108) |
| MS | 1328 [1186] (100) | 1467 [1310] (110) | 1421 [1269] (107) |
| AVERAGE | 905 [808] (100) | 948 [846] (107) | 1032 [921] (114) |

**TABLE 3**

| Plant Height in Meter [Inches] | | | |
|---|---|---|---|
| Location | Untreated | Mapiquat | Mapiquat + Boron |
| LA | 1.14 [45.0] | 1.03 [40.6] | 1.16 [45.5] |
| MS | 0.99 [39.1] | 0.78 [30.9] | 0.87 [34.1] |
| E. TX | 0.43 [16.9] | 0.39 [15.4] | 0.36 [14.3] |
| W. TX | 0.80 [31.4] | 0.72 [28.3] | 0.72 [28.3] |
| TN | 1.27 [50.0] | 1.09 [43.0] | 0.91 [36.0] |
| AVERAGE | 0.91 [36] | 0.81 [32] | 0.81 [32] |

**TABLE 4**

| Number Main Stem Nodes | | | |
|---|---|---|---|
| Location | Untreated | Mepiquat | Mepiquat + Boron |
| LA | 19.8 | 18.7 | 20.0 |
| MS | 24.5 | 23.2 | 22.9 |
| E. TX | 13.1 | 12.9 | 12.7 |
| W. TX | 21.2 | 20.6 | 20.2 |
| TN | 18.0 | 17.0 | 17.0 |
| AVERAGE | 19 | 18 | 19 |

Table 1 reports conventional measurements that are used to evaluate early maturity. As can be seen from Table 1, the same measurements were not made in all locations. Nevertheless, the total information obtained from the four locations clearly demonstrate the impact of the formulations of the invention in enhancing earliness of boll opening. Specifically, the "Nodes Above White Flower" measurement made at the Tennessee location is a validated, direct physiological measurement of earliness, and the results thereof strongly indicate that the formulations of the invention increase earliness. That is, the fact that there are zero nodes above white flower associated with the crops to which the mepiquat and boron formulation of the invention had been applied shows complete maturity of these cotton plants, even though the two control crops had not yet attained maturity. The results of the "Percent Open Bolls" measured at the East Texas location are a good indicator of earliness, i.e., the greater the percentage, or number, of open bolls, the greater the maturity. The results of the "Number of Open Bolls" measurement made at the Louisiana and Mississippi locations are consistent with the measurements made at the Tennessee and East Texas locations.

In addition, the crops at four of the above locations (all locations except East Texas) were observed visually during the period of boll opening. From the visual observations it was apparent, at each location, that the crop portion treated with formulations of the invention exhibited open bolls earlier than the crop portion that was treated with mepiquat, alone, or the portion of the cotton crop that was untreated.

The yield results shown in Table 2 illustrate the trend for formulations of the present invention to increase yield of lint.

The height measurements and main stem node measurements shown in Tables 3 and 4, respectively, demonstrate a generally insubstantial difference in crop height between plants treated with formulations of the invention and plants treated with mepiquat alone.

## Claims

1. A plant growth regulating product comprising a plant growth regulating formulation in a sealed package;
said formulation comprising an agriculturally acceptable mepiquat salt, disodium octaborate tetrahydrate, and an agriculturally acceptable carrier, said mepiquat salt and said water soluble boron salt being present in said formulation in a ratio of from about 14:1 to 1:45, calculated based on mepiquat cation and elemental boron;

2. The plant growth regulating product according to Claim 1 wherein said agriculturally acceptable mepiquat salt is mepiquat chloride.

3. The plant growth regulating product according to Claims 1 to 2 wherein said ratio of said mepiquat salt to disodium octaborate tetrahydrate, calculated based on mepiquat cation and elemental boron, is less than about 1:20.

4. The plant growth regulating product according to Claims 1 to 3 wherein said formulation is a liquid.

5. The plant growth regulating product according to Claims 1 to 4 wherein said formulation comprises between about 1 and about 15 wt. % of disodium octaborate tetrahydrate, calculated based on the complete weight of the boron salt.

6. The plant growth regulating product according to Claims 1 to 5 wherein said formulation comprises from about 0.01 to about 55 wt. % of said agriculturally acceptable mepiquat salt, calculated based on the weight of mepiquat cation.

7. The plant growth regulating product according to Claims 1 to 3 wherein said formulation is a solid.

8. The plant growth regulating product according to Claim 7 wherein said solid formulation comprises from about 0.01 to about 20 wt. % of disodium octaborate tetrahydrate, calculated based on elemental boron.

9. The plant growth regulating product according to Claims 7 to 8 wherein said solid formulation comprises from about 0.01 to about 70 wt. % of said agriculturally acceptable mepiquat salt, calculated based on mepiquat cation.

10. The plant growth regulating product according to Claims 7 to 9 wherein said solid formulation comprises from about 0.01 to about 95 wt. % of an agriculturally acceptable carrier.

11. The plant growth regulating product according to Claims 7 to 10 wherein said agriculturally acceptable carrier is a material selected from the group consisting of clay, diatomaceous earth, attapulgite, ammonium sulfate, ammonium nitrate, urea, solid polyols, salt, dirt or a cellulosic-based particulate material.

12. A plant growth regulating product according to claim 1;
said formulation comprising an agriculturally acceptable mepiquat salt and disodium octaborate tetrahydrate, said mepiquat salt and said disodium octaborate tetrahydrate being present in said formulation in a ratio of from about 5:1 to 1:20, calculated based on the mepiquat cation and elemental boron;

13. The plant growth regulating product according to Claim 12 wherein said ratio of said mepiquat salt to disodium octaborate tetrahydrate is from about 2:1 to about 1:10, calculated based on the mepiquat cation and elemental boron.

14. The plant growth regulating product according to Claims 12 to 13 wherein said agriculturally acceptable mepiquat salt comprises mepiquat chloride.

15. The plant growth regulating product according to Claims 12 to 14 wherein said formulation comprises between about 1 and about 15 wt. % of said disodium octaborate tetrahydrate, calculated based on the complete weight of the boron salt.

16. The plant growth regulating product according to Claims 7 to 11 wherein said solid formulation comprises from about 0.01 to about 20 wt. % of disodium octaborate tetrahydrate, calculated based on elemental boron.

17. The plant growth regulating product according to Claims 12 to 16 wherein said instructions on said package include instructions for application of said formulation to cotton.

18. The plant growth regulating product according to Claims 12 to 17 wherein said instructions on said package comprise instructions for application of said formulation such that said agriculturally acceptable water soluble boron salt is applied to cotton at a rate of between about 4.94 and about 98.8 g/ha(about 2 and about 40 g/acre) , per application.

19. A method for regulating growth of plants wherein a plant growth regulating formulation according to Claims 1 to 18 is applied to the foliage of the plants.

20. A method for regulating growth of plants according to Claim 19 wherein cotton ist treated.

21. The method according to Claim 19 comprising the steps of;
providing a concentrate comprising said agriculturally acceptable mepiquat salt and said disodium octaborate tetrahydrate; and
diluting said concentrate to form said formulation.

22. A method for regulating growth of plants according to claim 19 which comprises the use of said formulation in such a way that the application rate of disodium octaborate tetrahydrate is above 3.705 g/ha and less than 111.15 g/ha(above 1.5 g/acre and less than 45 g/acre), per application.

23. A method for regulating growth of plants according to claim 22 which comprises the use of said formulation in such a way that the application rate of disodium octaborate tetrahydrate is above 4.94 g/ha and less than 98.8 g/ha (above 2 g/acre and less than 40 g/acre), per application.

## Patentansprüche

1. Pflanzenwachstumsregulierendes Produkt enthaltend eine pflanzenwachstumsregulierende Formulierung in einer verschlossenen Verpackung, wobei diese Formulierung ein landwirtschaftlich unbedenkliches Mepiquat-Salz, Dinatriumoctaborat-tetrahydrat und einen landwirtschaftlich unbedenklichen Träger enthält, wobei das Mepiquat-Salz und das wasserlösliche Borsalz in der Formulierung in einem Verhältnis von ungefähr 14:1 bis 1:45, berechnet als Mepiquat-Kation und elementares Bor, enthält.

2. Pflanzenwachstumsregulierendes Produkt nach Anspruch 1, wobei es sich bei dem landwirtschaftlich unbedenklichen Mepiquat-Salz um Mepiquat-Chlorid handelt.

3. Pflanzenwachstumsregulierendes Produkt nach Anspruch 1 oder 2, wobei das Verhältnis des Mepiquat-Salzes zu Dinatriumoctaborat-tetrahydrat, berechnet als Mepiquat-Kation und elementares Bor, unter ungefähr 1:20 beträgt.

4. Pflanzenwachstumsregulierendes Produkt nach den Ansprüchen 1 bis 3, wobei es sich bei der Formulierung um eine Flüssigkeit handelt.

5. Pflanzenwachstumsregulierendes Produkt nach den Ansprüchen 1 bis 4, wobei die Formulierung zwischen ungefähr 1 und ungefähr 15 Gew.-% Dinatriumoctaborat-tetrahydrat, berechnet als Gesamtgewicht Borsalz, enthält.

6. Pflanzenwachstumsregulierendes Produkt nach den Ansprüchen 1 bis 5, wobei die Formulierung ungefähr 0,01 bis ungefähr 55 Gew.-% des landwirtschaftlich unbedenklichen Mepiquat-Salzes, berechnet als Gewicht Mepiquat-Kation, enthält.

7. Pflanzenwachstumsregulierendes Produkt nach den Ansprüchen 1 bis 3, wobei es sich bei der Formulierung um einen Feststoff handelt.

8. Pflanzenwachstumsregulierendes Produkt nach Anspruch 7, wobei die feste Formulierung ungefähr 0,01 bis ungefähr 20 Gew.-% Dinatriumoctaborat-tetrahydrat, berechnet als elementares Bor, enthält.

9. Pflanzenwachstumsregulierendes Produkt nach Anspruch 7 oder 8, wobei die feste Formulierung ungefähr 0,01 bis ungefähr 70 Gew.-% des landwirtschaftlich unbedenklichen Mepiquat-Salzes, berechnet als Mepiquat-Kation, enthält.

10. Pflanzenwachstumsregulierendes Produkt nach den Ansprüchen 7 bis 9, wobei die feste Formulierung ungefähr 0,01 bis ungefähr 95 Gew.-% eines landwirtschaftlich unbedenklichen Trägers enthält.

11. Pflanzenwachstumsregulierendes Produkt nach den Ansprüche 7 bis 10, wobei es sich bei dem landwirtschaftlich unbedenklichen Träger um ein Material aus der Gruppe Ton, Diatomeenerde, Attapulgit, Ammoniumsulfat, Ammoniumnitrat, Harnstoff, feste Polyole, Salz, Erde oder ein teilchenförmiges Material auf Zellstoffbasis handelt.

12. Pflanzenwachstumsregulierendes Produkt nach Anspruch 1, wobei die Formulierung ein landwirtschaftlich unbedenkliches Mepiquat-Salz und Dinatriumoctaborat-tetrahydrat enthält, wobei das Mepiquat-Salz und das Dinatriumoctaborat-tetrahydrat in der Formulierung in einem Verhältnis von ungefähr 5:1 bis 1:20, berechnet als Mepiquat-Kation und elementares Bor, enthält.

13. Pflanzenwachstumsregulierendes Produkt nach Anspruch 12, wobei das Verhältnis des Mepiquat-Salzes zu Dinatriumoctaborat-tetrahydrat ungefähr 2:1 bis ungefähr 1:10, berechnet als Mepiquat-Kation und elementares Bor, beträgt.

14. Pflanzenwachstumsregulierendes Produkt nach Anspruch 12 bis 13, wobei das landwirtschaftlich unbedenkliche Mepiquat-Salz Mepiquat-Chlorid enthält.

15. Pflanzenwachstumsregulierendes Produkt nach den Ansprüchen 12 bis 14, wobei die Formulierung zwischen ungefähr 1 und ungefähr 15 Gew.-% des Dinatriumoctaborat-tetrahydrats, berechnet als Gesamtgewicht Borsalz, enthält.

16. Pflanzenwachstumsregulierendes Produkt nach den Ansprüchen 7 bis 11, wobei die feste Formulierung ungefähr 0,01 bis ungefähr 20 Gew.-% Dinatriumoctaborat-tetrahydrat, berechnet als elementares Bor, enthält.

17. Pflanzenwachstumsregulierendes Produkt nach den Ansprüchen 12 bis 16, wobei die Anweisungen auf der Packung Anweisungen für die Ausbringung der Formulierung auf Baumwolle beinhalten.

18. Pflanzenwachstumsregulierendes Produkt nach den Ansprüchen 12 bis 17, wobei die Anweisungen auf der Packung Anweisungen für die Ausbringung der Formulierung dahingehend, das landwirtschaftlich unbedenkliche wasserlösliche Borsalz auf Baumwolle in einer Menge zwischen ungefähr 4,94 und ungefähr 98,8 g/ha (ungefähr 2 bzw. ungefähr 40 g/Acre) pro Ausbringung auszubringen, beinhalten.

19. Verfahren zur Regulierung des Wachstums von Pflanzen, wobei eine pflanzenwachstumsregulierende Formulierung nach den Ansprüchen 1 bis 18 auf das Blattwerk der Pflanzen ausgebracht wird.

20. Verfahren zur Regulierung des Wachstums von Pflanzen nach Anspruch 19, wobei Baumwolle behandelt wird.

21. Verfahren nach Anspruch 19 umfassend die folgenden Schritte:
Bereitstellen eines Konzentrats, das das landwirtschaftlich unbedenkliche Mepiquat-Salz und das Dinatriumoctaborat-tetrahydrat enthält, sowie
Verdünnen des Konzentrats, wodurch man zu der Formulierung gelangt.

22. Verfahren zur Regulierung des Wachstums von Pflanzen nach Anspruch 19, bei dem die Formulierung so verwendet wird, daß die Aufwandmenge an Dinatriumoctaborat-tetrahydrat über 3,705 g/ha und unter 111,15 g/ha (über 1,5 g/Acre bzw. unter 45 g/Acre) pro Ausbringung beträgt.

23. Verfahren zur Regulierung des Wachstums von Pflanzen nach Anspruch 22, bei dem die Formulierung so verwendet wird, daß die Aufwandmenge an Dinatriumoctaborat-tetrahydrat über 4,94 g/ha und unter 98,8 g/ha (über 2 g/Acre bzw. unter 40 g/Acre) pro Ausbringung beträgt.

## Revendications

1. Produit régulateur de croissance végétale comprenant une formulation régulatrice de croissance végétale dans un emballage fermé ;
ladite formulation comprenant un sel de mépiquat acceptable en agriculture, de l'octaborate disodique tétrahydraté et un support acceptable en agriculture, ledit sel de mépiquat et ledit sel de bore hydrosoluble étant présents dans ladite formulation en un rapport d'environ 14:1 à 1:45, calculé sur la base du cation mépiquat et du bore élémentaire.

2. Produit régulateur de croissance végétale selon la revendication 1, dans lequel ledit sel de mépiquat acceptable en agriculture est le mépiquat-chlorure.

3. Produit régulateur de croissance végétale selon les revendications 1 à 2, dans lequel ledit rapport dudit sel de mépiquat à l'octaborate disodique tétrahydraté, calculé sur la base du cation mépiquat et du bore élémentaire, est inférieur à environ 1:20.

4. Produit régulateur de croissance végétale selon les revendications 1 à 3, dans lequel ladite formulation est un liquide.

5. Produit régulateur de croissance végétale selon les revendications 1 à 4, dans lequel ladite formulation comprend entre environ 1 et environ 15 % en poids d'octaborate disodique tétrahydraté, calculé sur la base du poids total du sel de bore.

6. Produit régulateur de croissance végétale selon les revendications 1 à 5, dans lequel ladite formulation comprend environ 0,01 à environ 55 % en poids dudit sel de mépiquat acceptable en agriculture, calculé sur la base du poids de cation mépiquat.

7. Produit régulateur de croissance végétale selon les revendications 1 à 3, dans lequel ladite formulation est un solide.

8. Produit régulateur de croissance végétale selon la revendication 7, dans lequel ladite formulation solide comprend environ 0,01 à environ 20 % en poids d'octaborate disodique tétrahydraté, calculé sur la base du bore élémentaire.

9. Produit régulateur de croissance végétale selon les revendications 7 à 8, dans lequel ladite formulation solide comprend environ 0,01 à environ 70 % en poids dudit sel de mépiquat acceptable en agriculture, calculé sur la base du cation mépiquat.

10. Produit régulateur de croissance végétale selon les revendications 7 à 9, dans lequel ladite formulation solide comprend environ 0,01 à environ 95 % en poids d'un support acceptable en agriculture.

11. Produit régulateur de croissance végétale selon les revendications 7 à 10, dans laquelle ledit support acceptable en agriculture est une matière choisie dans le groupe formé par une argile, la terre de diatomées, l'attapulgite, le sulfate d'ammonium, le nitrate d'ammonium, l'urée, les polyols solides, le sel, la terre ou une matière particulaire à base cellulosique.

12. Produit régulateur de croissance végétale selon la revendication 1, ladite formulation comprenant un sel de mépiquat acceptable en agriculture et de l'octaborate disodique tétrahydraté, ledit sel de mépiquat et ledit octaborate disodique tétrahydraté étant présents dans ladite formulation en un rapport d'environ 5:1 à 1:20, calculé sur la base du cation mépiquat et du bore élémentaire.

13. Produit régulateur de croissance végétale selon la revendication 12, dans lequel ledit rapport dudit sel de mépiquat à l'octaborate disodique tétrahydraté est d'environ 2:1 à environ 1:10, calculé sur la base du cation mépiquat et du bore élémentaire.

14. Produit régulateur de croissance végétale selon les revendications 12 à 13, dans lequel ledit sel de mépiquat acceptable en agriculture comprend du mépiquat-chlorure.

15. Produit régulateur de croissance végétale selon les revendications 12 à 14, dans lequel ladite formulation comprend entre environ 1 et environ 15 % en poids dudit octaborate disodique tétrahydraté, calculé sur la base du poids total du sel de bore.

16. Produit régulateur de croissance végétale selon les revendications 7 à 11, dans lequel ladite formulation solide comprend environ 0,01 à environ 20 % en poids d'octaborate disodique tétrahydraté, calculé sur la base du bore élémentaire.

17. Produit régulateur de croissance végétale selon les revendications 12 à 16, dans lequel lesdites instructions sur ledit emballage comprennent des instructions pour l'application de ladite formulation au cotonnier.

18. Produit régulateur de croissance végétale selon les revendications 12 à 17, dans lequel lesdites instructions sur ledit emballage comprennent des instructions pour l'application de ladite formulation en sorte que ledit sel de bore hydrosoluble acceptable en agriculture soit appliqué au cotonnier à une dose comprise entre environ 4,94 et environ 98,8 g/ha (environ 2 et environ 40 g/acre), par application.

19. Procédé pour réguler la croissance de plantes, dans lequel une formulation régulatrice de croissance végétale selon les revendications 1 à 18 est appliquée au feuillage des plantes.

20. Procédé pour réguler la croissance de plantes selon la revendication 19, dans lequel on traite le cotonnier.

21. Procédé selon la revendication 19, comprenant les étapes suivantes :
fournir un concentré comprenant ledit sel de mépiquat acceptable en agriculture et ledit octaborate disodique tétrahydraté ; et
diluer ledit concentré pour former ladite formulation.

22. Procédé pour réguler la croissance de plantes selon la revendication 19, qui comprend l'utilisation de ladite formulation de telle manière que la dose d'application d'octaborate disodique tétrahydraté soit supérieure à 3,705 g/ha et inférieure à 111,15 g/ha (supérieure à 1,5 g/acre et inférieure à 45 g/acre), par application.

23. Procédé pour réguler la croissance de plantes selon la revendication 22, qui comprend l'utilisation de ladite formulation de telle manière que la dose d'application d'octaborate disodique tétrahydraté soit supérieure à 4,94 g/ha et inférieure à 98,8 g/ha (supérieure à 2 g/acre et inférieure à 40 g/acre), par application.
